# EUROPEAN PATENT APPLICATION

(11) **EP 4 807 314 A1**
(43) Date of publication of application: **16.09.2026**
(21) Application number: 23958272.9
(22) Date of filing: 08.11.2023
(51) Int. Cl.: G01B 5/00, G01B 5/28

(54) **MEASURING TOOL**

(71) Applicant: Sumitomo Electric Industries, Ltd., Osaka-shi, Osaka 541-0041 (JP)
(72) Inventor: SAKANO, Fumihide, Osaka-shi, Osaka 541-0041 (JP); TOMINAGA, Kosuke, Osaka-shi, Osaka 541-0041 (JP); IIHARA, Junji, Osaka-shi, Osaka 541-0041 (JP)
(74) Representative: Boult Wade Tennant LLP
(86) International application number: PCT/JP2023/040259
(87) International publication number: WO 2025/099870

(57) **Abstract**

The measuring tool includes a shaft member, a tip member, and a carbon layer. The shaft member extends in a first direction, and has a first end and a second end opposite to the first end in the first direction. The tip member is provided at the second end. The constituent material of the tip member is diamond that contains at least one element of nitrogen, boron, and phosphorus. The tip member has a third end connected to the second end and a fourth end opposite to the third end in the first direction. The tip member includes a first portion that has the third end and a second portion that has the fourth end and is continuous with the first portion in the first direction. The constituent material of the carbon layer is a non-diamond carbon material. The carbon layer is at least formed on a surface of the first portion. The thickness of the carbon layer formed on the first portion is greater than the thickness of the carbon layer formed on the second portion. When viewed in a cross-sectional view parallel to the first direction, the width of the second portion in the second direction orthogonal to the first direction decreases toward the fourth end, and a surface of the second portion is formed by a curved line.

## Description

### TECHNICAL FIELD

The present disclosure relates to a measuring tool.

### BACKGROUND ART

For example, WO 2021/106075 (PTL 1) describes a measuring tool. The measuring tool described in PTL 1 includes a tip member and a shaft member. The tip member is provided at one end of the shaft member. The constituent material of the tip member is polycrystalline diamond that contains at least one element of nitrogen, boron, and phosphorus.

### CITATION LIST

### PATENT LITERATURE

PTL 1: WO 2021/106075 (PTL 1)

### SUMMARY OF INVENTION

The measuring tool of the present disclosure includes a shaft member, a tip member, and a carbon layer. The shaft member extends in a first direction, and has a first end and a second end opposite to the first end in the first direction. The tip member is provided at the second end. The constituent material of the tip is diamond that contains at least one element of nitrogen, boron, and phosphorus. The tip member has a third end connected to the second end and a fourth end opposite to the third end in the first direction. The tip member includes a first portion that has the third end, and a second portion that has the fourth end and is continuous with the first portion in the first direction. The constituent material of the carbon layer is a non-diamond carbon material. The carbon layer is at least formed on a surface of the first portion. The thickness of the carbon layer formed on the first portion is greater than the thickness of the carbon layer formed on the second portion. When viewed in a cross-sectional view parallel to the first direction, the width of the second portion in a second direction orthogonal to the first direction decreases toward the fourth end, and a surface of the second portion is formed by a curved line.

### BRIEF DESCRIPTION OF DRAWINGS

[Fig. 1] Fig. 1 is a side view of a measuring tool 100.
[Fig. 2] Fig. 2 is a cross-sectional view taken along line II-II in Fig. 1.
[Fig. 3] Fig. 3 is a perspective view of a measuring tool 100 according to a first modification.
[Fig. 4] Fig. 4 is a perspective view of a measuring tool 100 according to a second modification.
[Fig. 5] Fig. 5 is a perspective view of a measuring tool 100 according to a third modification.
[Fig. 6] Fig. 6 is a diagram illustrating a manufacturing method of a measuring tool 100.

### DETAILED DESCRIPTION

### [Problem to be Solved by the Present Disclosure]

The measuring tool described in PTL 1 measures a surface condition (surface roughness or the like) of a workpiece by bringing a tip member into contact with the workpiece. During this process, fine powder generated at a contact portion between the tip member and the workpiece adheres to the tip member, which shortens the service life of the measuring tool described in PTL 1. The present disclosure provides a measuring tool with an improved service life.

### [Advantageous Effects of the Present Disclosure]

According to the present disclosure, it is possible to improve the service life of the measuring tool.

### [Description of Embodiments]

First, aspects of the present disclosure will be described.
(1) A measuring tool according to an embodiment includes a shaft member, a tip member, and a carbon layer. The shaft member extends in a first direction, and has a first end and a second end opposite to the first end in the first direction. The tip member is provided at the second end. The constituent material of the tip is diamond that contains at least one element of nitrogen, boron, and phosphorus. The tip member has a third end connected to the second end and a fourth end opposite to the third end in the first direction. The tip member includes a first portion that has the third end, and a second portion that has the fourth end and is continuous with the first portion in the first direction. The constituent material of the carbon layer is a non-diamond carbon material. The carbon layer is at least formed on a surface of the first portion. The thickness of the carbon layer formed on the first portion is greater than the thickness of the carbon layer formed on the second portion. When viewed in a cross-sectional view parallel to the first direction, the width of the second portion in a second direction orthogonal to the first direction decreases toward the fourth end, and a surface of the second portion is formed by a curved line. According to aspect (1), it is possible to improve the service life of the measuring tool.
(2) In the measuring tool according to aspect (1), the surface of the second portion may be partially spherical. According to aspect (2), it is possible to improve the service life of the measuring tool.
(3) In the measuring tool according to aspect (1) or (2), the thickness of the carbon layer formed on the first portion may be 30 nm or more. According to aspect (3), it is possible to further improve the service life of the measuring tool.
(4) In the measuring tools according to any one of aspects (1) to (3), the thickness of the carbon layer formed on the first portion may be 80 nm or more. According to aspect (4), it is possible to further improve the service life of the measuring tool.
(5) In the measuring tools according to any one of aspects (1) to (4), the thickness of the carbon layer formed on the first portion may be 150 nm or more. According to aspect (5), it is possible to further improve the service life of the measuring tool.
(6) In the measuring tools according to any one of aspects (1) to (5), the thickness of the carbon layer formed on the second portion may be less than 50 nm. According to aspect (6), it is possible to further improve the service life of the measuring tool.
(7) In the measuring tools according to any one of aspects (1) to (6), the thickness of the carbon layer formed on the second portion may be 30 nm or less. According to aspect (7), it is possible to further improve the service life of the measuring tool.
(8) In the measuring tools according to any one of aspects (1) to (7), a distance between the fourth end and a boundary between the first portion and the second portion in the first direction may be 1 µm or more and 200 µm or less. According to aspect (8), it is possible to improve the service life of the measuring tool.
(9) In the measuring tools according to any one of aspects (1) to (8), the diamond may be a polycrystalline body that contains a plurality of diamond particles. The average particle diameter of the plurality of diamond particles may be 5 nm or more and 500 nm or less. According to aspect (9), it is possible to improve the service life of the measuring tool.
(10) In the measuring tools according to any one of aspects (1) to (8), the carbon material may contain graphite. According to aspect (10), it is possible to improve the service life of the measuring tool.

### [Details of Embodiments]

Next, embodiments of the present disclosure will be described in detail with reference to the drawings. In the following drawings, the same or corresponding parts are denoted by the same reference numerals, and the description will not be repeated. The measuring tool according to the embodiment is defined to as a measuring tool 100.

### (Configuration of Measuring Tool 100)

Hereinafter, the configuration of measuring tool 100 will be described.

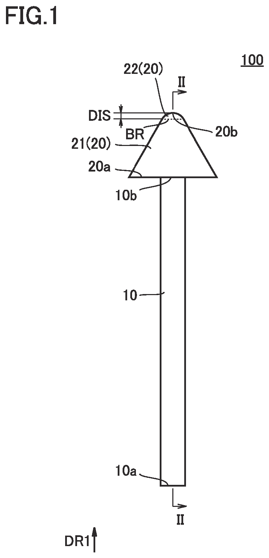

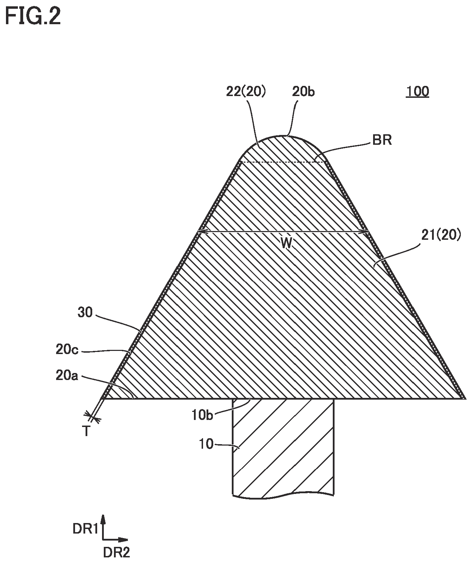

Fig. 1 is a side view of a measuring tool 100. Fig. 2 is a cross-sectional view taken along line II-II in Fig. 1. As illustrated in Figs. 1 and 2, measuring tool 100 includes a shaft member 10, a tip member 20, and a carbon layer 30. Measuring tool 100 is, for example, a stylus.

Shaft member 10 has a columnar shape extending in a first direction DR1. Shaft member 10 has a first end 10a and a second end 10b in first direction DR1. Second end 10b is opposite to first end 10a. Shaft member 10 may have, for example, a cylindrical shape. The constituent material of shaft member 10 is, for example, cemented carbide. Shaft member 10 may be integrally formed with tip member 20 using the same constituent material as tip member 20 will be described below.

Tip member 20 is provided at second end 10b. Tip member 20 has a third end 20a and a fourth end 20b in first direction DR1. Third end 20a is connected to shaft member 10 (second end 10b). Fourth end 20b is opposite to third end 20a. The surface of tip member 20 is referred to as surface 20c. Tip member 20 is divided into a first portion 21 and a second portion 22 in first direction DR1. First portion 21 includes third end 20a. Second portion 22 includes fourth end 20b and is continuous with first portion 21. When measuring tool 100 is used to measure a surface condition of a workpiece, second portion 22 is brought into contact with the workpiece.

A cross section parallel to first direction DR1 is referred to as a cross-sectional view. A direction orthogonal to first direction DR1 in the cross-sectional view is referred to as a second direction DR2. In the cross-sectional view, the width of tip member 20 in second direction DR2 is referred to as width W. Width W of second portion 22 decreases toward fourth end 20b. Surface 20c of second portion 22 is formed by a curved line. In other words, second portion 22 is a portion of tip member 20 that satisfies both a condition that width W decreases toward fourth end 20b (first condition) and a condition that surface 20c is formed by a curved line in the cross-sectional view (second condition).

In the example illustrated in Fig. 2, first portion 21 has a truncated cone shape, and second portion 22 has a partially spherical shape (semispherical shape). Width W of the truncated cone shape described above decreases toward fourth end 20b (which satisfies the first condition), but surface 20c is formed by a straight line in the cross-sectional view (which does not satisfy the second condition), and thereby this portion does not constitute second portion 22. In the present embodiment, second portion 22 has a partially spherical shape, and thereby surface 20c of second portion 22 is partially spherical.

A boundary between first portion 21 and second portion 22 is referred to as boundary BR. A distance between boundary BR and fourth end 20b in first direction DR1 is defined as distance DIS. Distance DIS is, for example, 1 µm or more and 200 µm or less. In the example illustrated in Fig. 2, distance DIS may be, for example, 1 µm or more and 10 µm or less.

The constituent material of tip member 20 is diamond that contains at least one element of nitrogen, boron, and phosphorus. In the crystal structure of diamond, nitrogen, boron, and phosphorus may substitute a part of carbon atoms or may be inserted between carbon atoms. The total concentration of nitrogen, boron, and phosphorus in the diamond may be, for example, 1 ppm or more and 5000 ppm or less, or 10 ppm or more and 4000 ppm or less. The concentration of nitrogen, boron and phosphorus in the diamond is measured by secondary ion mass spectrometry (SIMS).

The diamond that constitutes tip member 20 is, for example, a polycrystalline body (diamond polycrystalline body) that contains a plurality of diamond particles. The diamond polycrystalline body that constitutes tip member 20 is, for example, a binderless polycrystalline diamond (a diamond polycrystalline body that does not contain a binder). In the binderless polycrystalline diamond, diamond particles are directly bonded to each other without a binder such as a metal binder.

The average particle diameter of the plurality of diamond particles contained in the diamond polycrystalline body that constitutes tip member 20 is, for example, 5 nm or more and 500 nm or less. The average particle diameter is measured by the following method. Firstly, a sample is taken from tip member 20, the surface of the sample is precisely polished, and then a backscattered electron image is obtained using an electron microscope under conditions that allow observation of grain boundaries. Secondly, the backscattered electron image is subjected to image analysis to calculate the average particle diameter.

Carbon layer 30 is at least formed on surface 20c of first portion 21. Although not illustrated in the drawings, carbon layer 30 may be further formed on surface 20c of second portion 22. Carbon layer 30 may not be formed on surface 20c of second portion 22. The thickness of carbon layer 30 is referred to as thickness T. Thickness T of carbon layer 30 formed on first portion 21 is larger than thickness T of carbon layer 30 formed on second portion 22. Thickness T of carbon layer 30 formed on first portion 21 may be, for example, 30 nm or more, 80 nm or more, or 150 nm or more. Thickness T of carbon layer 30 formed on second portion 22 may be less than 50 nm or 30 nm or less, for example. Since carbon layer 30 may not be formed on surface 20c of second portion 22 as described above, thickness T of carbon layer 30 formed on second portion 22 may be 0.

Thickness T is measured by the following method. Firstly, a sample including carbon layer 30 is taken from surface 20c. Secondly, a transmission electron microscope (TEM: Transmission Electron Microscope) is used to obtain a cross-sectional image of the sample parallel to first direction DR1. The magnification for obtaining the cross-sectional image is set to 200,000 times. Thirdly, the thickness of carbon layer 30 is measured from the cross-sectional image. The minimum value of the measured thickness of carbon layer 30 is defined as thickness T.

The constituent material of carbon layer 30 is a non-diamond carbon material (a carbon material other than diamond). The constituent material of carbon layer 30 contains, for example, graphite. Whether or not carbon layer 30 contains graphite is determined using Raman spectroscopy.

More specifically, firstly, carbon layer 30 is irradiated with a laser having a wavelength of 532 nm as excitation light at room temperature. Secondly, Raman light is generated from carbon layer 30 due to the irradiation with the excitation light, and a spectrum analysis is performed on the Raman light generated from carbon layer 30 using a spectrometer (for example, LabRAM HR UV-VISNIR manufactured by HORIBA, Ltd.) with a wavenumber resolution of 0.25 cm⁻¹ or less. Thirdly, based on the phonon peaks obtained from the spectral analysis, a composite function of a Lorentzian function and a Gaussian function is fitted according to the least squares method to determine the presence or absence of a graphite peak that appears in the wavenumber range of 1400 cm⁻¹ to 1700 cm⁻¹. If this graphite peak is present, it is determined that carbon layer 30 contains graphite.

The constituent material of carbon layer 30 is not limited to graphite. Carbon layer 30 may contain amorphous carbon.

### <First Modification to Third Modification>

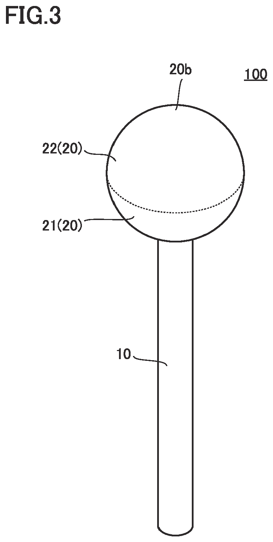

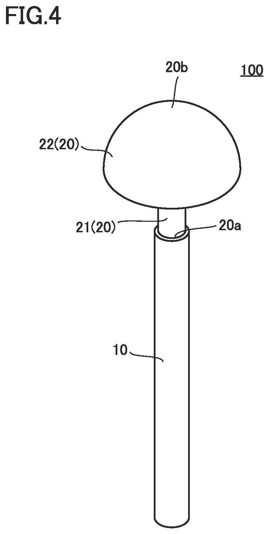

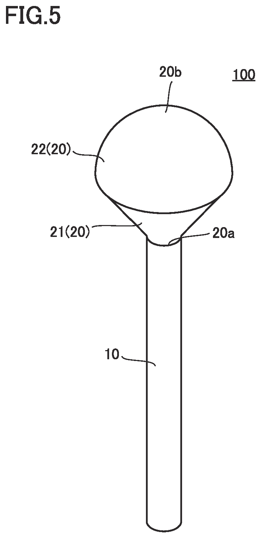

Fig. 3 is a perspective view of a measuring tool 100 according to a first modification. Fig. 4 is a perspective view of a measuring tool 100 according to a second modification. Fig. 5 is a perspective view of a measuring tool 100 according to a third modification. As illustrated in Figs. 3 to 5, the shape of tip member 20 (first portion 21 and second portion 22) is not limited to the example shapes illustrated in Figs. 1 and 2.

In the example illustrated in Fig. 3, tip member 20 is spherical. In other words, the hemisphere on the side of third end 20a constitutes first portion 21, and the hemisphere on the side of fourth end 20b constitutes second portion 22. In this example, since width W of the hemisphere on the side of third end 20a increases toward fourth end 20b, the hemisphere constitutes first portion 21 instead of second portion 22. Since width W of the hemisphere on the side of fourth end 20b decreases toward fourth end 20b and surface 20c has a curved shape (an arc shape) in the cross-sectional view, the hemisphere satisfies the first condition and the second condition, and thereby constitutes second portion 22.

In the example illustrated in Fig. 4, the cylinder on the side of third end 20a constitutes first portion 21, and the hemisphere on the side of fourth end 20b constitutes second portion 22. In the example illustrated in Fig. 5, the truncated cone on the side of third end 20a constitutes first portion 21, and the hemisphere on the side of fourth end 20b constitutes second portion 22.

### (Manufacturing Method of Measuring Tool 100)

Hereinafter, a manufacturing method of measuring tool 100 will be described.

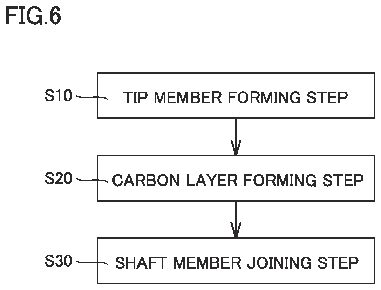

Fig. 6 is a diagram illustrating a manufacturing method of measuring tool 100. As illustrated in Fig. 6, the manufacturing method of measuring tool 100 includes a tip member forming step S10, a carbon layer forming step S20, and a shaft member joining step S30. The carbon layer forming step S20 is performed after the tip forming step S10. The shaft member joining step S30 is performed after the carbon layer forming step S20.

In the tip member forming step S 10, tip member 20 is formed. In the tip member forming step S 10, firstly, a diamond polycrystalline body that contains an additive element (nitrogen, boron, phosphorus) is formed. In the formation of the diamond polycrystalline body, first, an additive element-containing graphite is prepared. A mixed gas of a hydrocarbon gas and a gas containing the additive element (additive element-containing gas) is supplied onto a base material disposed and heated in a vacuum chamber. Thus, the additive element-containing graphite is formed on the base material.

The heating temperature of the base material is, for example, 1500°C or more and 3000°C or less. The constituent material of the base material is not particularly limited as long as it can withstand the heating temperature. From the viewpoint of preventing impurities from being mixed into the graphite, the constituent material of the base material is preferably a carbon material (for example, diamond or graphite). The hydrocarbon gas is, for example, methane gas. The additive element-containing gas is a gas that contains a hydride of the additive element or an organic compound of the additive element. The mixed gas may contain an inert gas such as argon.

Then, the graphite is sintered in a high-pressure press apparatus to produce a diamond polycrystalline body. The heating temperature is 2300°C, and the pressure is 15 GPa, for example. As a result, the graphite is sintered and converted into diamond, producing a diamond polycrystalline body containing the additive element. The average particle diameter of the plurality of diamond particles contained in the diamond polycrystalline body can be adjusted by the concentration of the additive element or the heating temperature of the vacuum chamber.

In the tip member forming step S10, secondly, the diamond polycrystalline body is machined into a desired shape to obtain tip member 20. The diamond polycrystalline body is machined by, for example, beam machining using a laser, an ion beam or an electron beam, electric discharge machining, or plasma jet machining. After these processes are performed, the surface of the diamond polycrystalline body may be polished.

In the carbon layer forming step S20, carbon layer 30 is formed. Carbon layer 30 is formed by heating surface 20c to convert diamond on surface 20c into a non-diamond carbon material. The heating is performed by plasma treatment or discharge treatment, for example. In order to form carbon layer 30 on surface 20c of first portion 21, surface 20c of second portion 22 may be masked during the heating. Alternatively, after carbon layer 30 is formed on the entire surface 20c, a part of or the entire part of carbon layer 30 formed on surface 20c of second portion 22 may be removed by polishing, acid treatment (immersion in a heated acid mixture that contains nitric acid and sulfuric acid), or the like.

In the shaft member joining step S30, shaft member 10 is joined to third end 20a. Through the steps described above, measuring tool 100 is formed.

### (Effects of Measuring tool 100)

Hereinafter, the effects of measuring tool 100 will be described.

When tip member 20 is brought into contact with a workpiece, fine powder may be generated from the contact portion between tip member 20 and the workpiece. If the fine powder is not discharged from the contact portion but remains in the vicinity of the contact portion by adhering to tip member 20 or the like, it accelerates wear on tip member 20, which shortens the service life of measuring tool 100.

However, in measuring tool 100, carbon layer 30 is formed on surface 20c of first portion 21. Since carbon layer 30 is made of a non-diamond carbon material, carbon layer 30 has a high sliding property, which makes it possible to discharge the fine powder quickly from the vicinity of the contact portion. One reason to cause the fine powder to adhere to tip member 20 is static electricity; however, since carbon layer 30 is made of a non-diamond carbon material and is conductive, static electricity is less likely to accumulate in carbon layer 30, making it less likely for the fine powder to adhere to tip member 20 due to static electricity. Therefore, it is possible to improve the service life of measuring tool 100.

Carbon layer 30 formed on surface 20c of second portion 22 becomes a generation source of the fine powder when it is brought into contact with the workpiece. However, in measuring tool 100, since thickness T of carbon layer 30 formed on second portion 22 is smaller than thickness T of carbon layer 30 formed on first portion 21, the influence of carbon layer 30 formed on surface 20c of second portion 22 as a generation source of the fine powder is sufficiently reduced.

Furthermore, if carbon layer 30 is not present, unevenness on the surface of the workpiece may cause surface 20c of first portion 21 to unintentionally contact with the workpiece. In measuring tool 100, carbon layer 30 formed on surface 20c of second portion 22 protects tip member 20 from such unintentional contact with the workpiece. From this viewpoint, it is possible to improve the service life of measuring tool 100.

When thickness T of carbon layer 30 formed on first portion 21 is 80 nm or more or 150 nm or more, the electrical resistance value of carbon layer 30 is further reduced, making it even more difficult for the static electricity to accumulate in carbon layer 30. Therefore, in this case, the fine powder is more easily discharged, further improving the service life of measuring tool 100. In addition, in this case, carbon layer 30 further improves the function of protecting tip member 20 from unintentional contact with the workpiece, further improving the service life of the measuring tool 100. Furthermore, when thickness T of carbon layer 30 formed on second portion 22 is less than 50 nm, carbon layer 30 formed on surface 20c of second portion 22 is less likely to become a generation source of the fine powder, further improving the service life of measuring tool 100.

### (Service Life Evaluation Test)

To evaluate the effect of measuring tool 100, a service life evaluation test was conducted on a measuring tool sample. Samples 1 to 7 were subjected to the service life evaluation test. Thickness T of carbon layer 30 formed on first portion 21 and second portion 22 was changed in samples 1 to 7. In samples 1 to 7, distance DIS was set constant at 2 µm, and as illustrated in Figs. 1 and 2, tip member 20 was formed as a combination unit of first portion 21 having a truncated cone shape and second portion 22 having a hemispherical shape. The details of samples 1 to 7 are shown in Table 1.

### [Table 1]

**Table 1**

| | Thickness T (nm) | | Scanning Distance (m) |
|---|---|---|---|
| | First Portion 21 | Second Portion 22 | |
| Sample 1 | 150 | ≤25 | >100 |
| Sample 2 | 150 | 45 | 100 |
| Sample 3 | 80 | ≤25 | 100 |
| Sample 4 | 80 | 45 | 90 |
| Sample 5 | 80 | 50 | 60 |
| Sample 6 | 70 | ≤25 | 50 |
| Sample 7 | ≤25 | ≤25 | 40 |

Condition A is set in such a manner that thickness T of carbon layer 30 formed on first portion 21 is greater than thickness T of carbon layer 30 formed on second portion 22. Samples 1 to 6 satisfy condition A, but sample 7 does not satisfy condition A. In other words, samples 1 to 6 correspond to measuring tool 100, whereas sample 7 does not correspond to measuring tool 100. Condition B1 is set in such a manner that thickness T of carbon layer 30 formed on first portion 21 is 80 nm or more, and condition B2 is set in such a manner that thickness T of carbon layer 30 formed on first portion 21 is 150 nm or more. Condition C1 is set in such a manner that thickness T of carbon layer 30 formed on second portion 22 is less than 50 nm, and condition C2 is set in such a manner that thickness T of carbon layer 30 formed on second portion 22 is 30 nm or less.

The service life of each of samples 1 to 7 was evaluated by scanning each sample on a workpiece while applying a load of 10 mN to bring second portion 22 into contact with the workpiece. The workpiece was a plate member made of polycrystalline alumina. Each sample was inspected using an electron microscope to check for a defect in tip member 20 every 10 m of scanning, and the service life was evaluated by the distance scanned until the defect was found. The results of the service life evaluation test, i.e., the scanning distance of each of samples 1 to 7 is also shown in Table 1.

As shown in Table 1, the scanning distance of each of samples 1 to 6 was longer than the scanning distance of sample 7. This indicates that the service life of measuring tool 100 is improved when it satisfies condition A, in other words, when thickness T of carbon layer 30 formed on first portion 21 is greater than thickness T of carbon layer 30 formed on second portion 22.

Thickness T of carbon layer 30 formed on second portion 22 is the same in sample 3 and sample 6. However, sample 3 satisfies condition B1, whereas sample 6 does not satisfy condition B1. The scanning distance of sample 3 was longer than the scanning distance of sample 6. This comparison indicates that the service life of measuring tool 100 is further improved when it satisfies condition B1, in other words, when thickness T of carbon layer 30 formed on first portion 21 is 80 nm or more. Thickness T of carbon layer 30 formed on second portion 22 is the same in sample 1 and sample 3. However, sample 1 satisfies condition B2, whereas sample 3 does not satisfy condition B2. The scanning distance of sample 1 was longer than the scanning distance of sample 3. This comparison indicates that the service life of measuring tool 100 is further improved when it satisfies condition B2, in other words, when thickness T of carbon layer 30 formed on first portion 21 is 150 nm or more.

Thickness T of carbon layer 30 formed on first portion 21 is the same in sample 4 and sample 5. However, sample 4 satisfies condition C1, whereas sample 5 does not satisfy condition C1. The scanning distance of sample 4 was longer than the scanning distance of sample 5. This comparison indicates that the service life of measuring tool 100 is further improved when it satisfies condition C1, in other words, when thickness T of carbon layer 30 formed on second portion 22 is less than 50 nm.

Thickness T of carbon layer 30 formed on first portion 21 is the same in sample 3 and sample 4. However, sample 3 satisfies condition C2, whereas sample 4 does not satisfy condition C2. The scanning distance of sample 3 was longer than the scanning distance of sample 4. Thickness T of carbon layer 30 formed on first portion 21 is the same in sample 1 and sample 2. However, sample 1 satisfies condition C2, whereas sample 2 does not satisfy condition C2. The scanning distance of sample 1 was longer than the scanning distance of sample 2. These comparisons indicate that the service life of measuring tool 100 is further improved when it satisfies condition C2, in other words, when thickness T of carbon layer 30 formed on second portion 22 is 30 nm or less.

It should be understood that the embodiments disclosed herein are illustrative and non-restrictive in all respects. It is intended that the scope of the present invention is not limited to the description above but defined by the scope of the claims and encompasses all modifications equivalent in meaning and scope to the claims.

### REFERENCE SIGNS LIST

10: shaft member; 10a: first end; 10b: second end; 20: tip member; 20a: third end; 20b: fourth end; 20c: surface; 21: first portion; 22: second portion; 30: carbon layer; 100: measuring tool; BR: boundary; DIS: distance; DR1: first direction; DR2: second direction; S10: tip member forming step; S20: carbon layer forming step; S30: shaft member joining step; T: thickness; W: width.

## Claims

1. A measuring tool comprising:
a shaft member;
a tip member; and
a carbon layer, wherein
the shaft member extends in a first direction, and has a first end and a second end opposite to the first end in the first direction,
the tip member is provided at the second end,
the constituent material of the tip member is diamond that contains at least one element of nitrogen, boron, and phosphorus,
the tip member has a third end connected to the second end and a fourth end opposite to the third end in the first direction,
the tip member includes a first portion that has the third end, and a second portion that has the fourth end and is continuous with the first portion in the first direction,
the constituent material of the carbon layer is a non-diamond carbon material,
the carbon layer is at least formed on a surface of the first portion,
the thickness of the carbon layer formed on the first portion is greater than the thickness of the carbon layer formed on the second portion, and
when viewed in a cross-sectional view parallel to the first direction, the width of the second portion in a second direction orthogonal to the first direction decreases toward the fourth end, and a surface of the second portion is formed by a curved line.

2. The measuring tool of claim 1, wherein
the surface of the second portion is partially spherical.

3. The measuring tool according to claim 1 or claim 2, wherein
the thickness of the carbon layer formed on the first portion is 30 nm or more.

4. The measuring tool according to any one of claims 1 to 3, wherein
the thickness of the carbon layer formed on the first portion is 80 nm or more.

5. The measuring tool according to any one of claims 1 to 4, wherein
the thickness of the carbon layer formed on the first portion is 150 nm or more.

6. The measuring tool according to any one of claims 1 to 5, wherein
the thickness of the carbon layer formed on the second portion is less than 50 nm.

7. The measuring tool according to any one of claims 1 to 6, wherein
the thickness of the carbon layer formed on the second portion is 30 nm or less.

8. The measuring tool according to any one of claims 1 to 7, wherein
a distance between the fourth end and a boundary between the first portion and the second portion in the first direction is 1 µm or more and 200 µm or less.

9. The measuring tool according to any one of claims 1 to 8, wherein
the diamond is a polycrystalline body that contains a plurality of diamond particles, and
an average particle diameter of the plurality of diamond particles is 5 nm or more and 500 nm or less.

10. The measuring tool according to any one of claims 1 to 9, wherein
the carbon material contains graphite.
